(19) Europäisches Patentamt
European Patent Office
Office européen des brevets

(11) Veröffentlichungsnummer: **0 020 988**
**A2**

# (12) EUROPÄISCHE PATENTANMELDUNG

(21) Anmeldenummer: **80102617.0**

(22) Anmeldetag: **12.05.80**

(51) Int. Cl.³: **C 07 C 120/00**, C 07 C 121/66, C 07 C 121/75, C 07 F 9/12 // C07F9/28

(30) Priorität: **26.05.79 DE 2916224**

(43) Veröffentlichungstag der Anmeldung: **07.01.81 Patentblatt 81/1**

(84) Benannte Vertragsstaaten: **BE CH DE FR GB IT LI NL**

(71) Anmelder: **BAYER AG, Zentralbereich Patente, Marken und Lizenzen, D-5090 Leverkusen 1, Bayerwerk (DE)**

(72) Erfinder: **Hofmann, Hellmut, Prof. Dr., Tersteegenweg 17, D-5600 Wuppertal 1 (DE)**

## (54) Verfahren zur Herstellung von Alpha-Cyano-benzylestern und Zwischenprodukte dafür sowie deren Herstellung.

(57) Die Erfindung betrifft ein neues Verfahren zur Herstellung von α-Cyanobenzylestern der Formel (I)

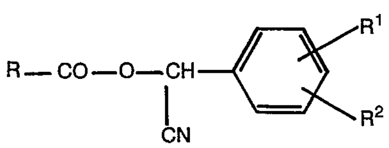

(I)

in welcher R, $R^1$ und $R^2$ die in der Beschreibung angegebene Bedeutung haben, dadurch gekennzeichnet, daß man Phosphorsäure-α-cyano-benzylester der Formel (II)

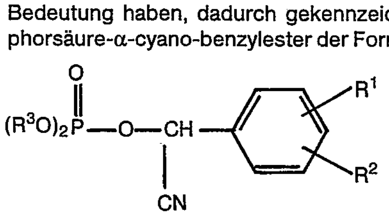

(II)

mit Carbonsäuresalzen der Formel (III)

$$R\text{-}CO\text{-}O^{\ominus}\ M^{\oplus} \quad (III)$$

umsetzt sowie neue Zwischenprodukte zur Durchführung dieses Verfahrens und ein Verfahren zur Herstellung dieser Zwischenprodukte.

EP 0 020 988 A2

BAYER AKTIENGESELLSCHAFT D 5090 Leverkusen, Bayerwerk

Zentralbereich
Patente, Marken und Lizenzen Rt/kl

Typ IVa

## Verfahren zur Herstellung von α-Cyano-benzylestern

Die Erfindung betrifft ein neues Verfahren zur Herstellung von α-Cyano-benzylestern.

Es ist bekannt, daß man bestimmte insektizide α-Cyano-benzylester, wie z.B. 3-(2,2-Dichlorvinyl)-2,2-dimethyl-cyclopropan-1-carbonsäure-(α-cyano-3-phenoxy-benzyl)-ester, durch Umsetzung von reaktionsfähigen Carbonsäurederivaten, wie z.B. 3-(2,2-Dichlorvinyl)-2,2-dimethyl-cyclopropan-1-carbonsäure-chlorid mit α-Cyano-benzyl-alkoholen, wie z.B. α-Cyano-3-phenoxy-benzylalkohol, erhält (vergleiche DE-OS 2 326 o77).

Die hierzu als Ausgangsstoffe benötigten α-Cyanobenzyl-alkohole, welche gewöhnlich durch Umsetzung von entsprechenden Benzaldehyden, wie z.B. 3-Phenoxybenzaldehyd, mit Alkalicyaniden, wie z.B. Kaliumcyanid, in Gegenwart wässriger Säuren, wie z.B. Salzsäure, hergestellt werden, können jedoch in vielen Fällen nur schwer in reiner Form und gleichzeitig in guter Ausbeute isoliert werden.



BAD ORIGINAL

Für verschiedene substituierte Benzaldehyde, welche als Vorstufen für insektizid hochwirksame Pyrethroide von Interesse sind, gibt es bisher noch keine für die Herstellung im industriellen Maßstab gut geeignete Herstellungsverfahren.

Daher besteht ein Interesse an Verfahren, nach welchen α-Cyano-benzylester ohne Verwendung von α-Cyanobenzylalkoholen und/oder entsprechenden Benzaldehyden hergestellt werden können.

Gegenstand der Erfindung sind

(1) ein Verfahren zur Herstellung von α-Cyano-benzylestern der Formel I

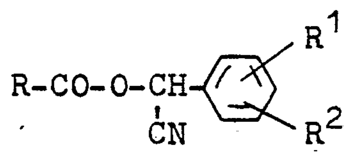

(I)

in welcher

R für einen offenkettigen oder cyclischen Alkylrest steht, der gegebenenfalls substituiert ist durch Halogen, Alkyl, Cycloalkyl, Alkenyl, welches gegebenenfalls durch Halogen substituiert ist, Styryl, welches gegebenenfalls durch Halogen substituiert ist, Phenyl, welches gegebenenfalls durch Halogen, Alkyl, Alkoxy, Alkylthio, Halogenalkyl, Halogenalkoxy, Halogenalkylthio oder gegebenenfalls halogensubstituiertes Alkylendioxy substituiert ist, spirocyclisch verknüpftes Cycloalk(en)yl, welches gegebenen-

falls benzannelliert ist,

$R^1$ für Wasserstoff, Halogen, gegebenenfalls halogensubstituierte Reste Alkyl, Alkenyl, Alkinyl, Alkoxy, Alkenoxy, Alkinoxy, Aralkyl oder Aryloxy steht und

$R^2$ für Wasserstoff oder Halogen steht,

dadurch gekennzeichnet, daß man

Phosphorsäure-α-cyano-benzylester der Formel II

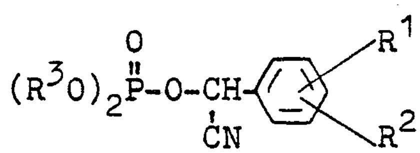

(II)

in welcher

$R^1$ und $R^2$ die oben angegebene Bedeutung haben und

$R^3$ für Alkyl, Phenyl oder Alkandiyl (Alkylen) steht,

mit Carbonsäuresalzen der Formel III

$$R\text{-}CO\text{-}O^{\ominus} \quad M^{\oplus} \qquad (III)$$

in welcher

R die oben angegebene Bedeutung hat und

M für ein Alkalimetall- oder Erdalkalimetalläquivalent steht,

gegebenenfalls unter Verwendung eines Verdünnungsmittels bei Temperaturen zwischen 2o und 25o°C umsetzt;

(2) neue Phosphorsäure-α-cyano-benzylester der Formel (II)

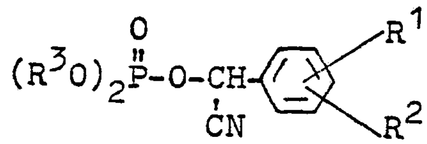

(II)

in welcher

$R^1$, $R^2$ und $R^3$ die oben angegebene Bedeutung haben;

(3) ein Verfahren zur Herstellung von Phosphorsäure-α-cyano-benzylestern der Formel (II) (oben), dadurch gekennzeichnet, daß man Benzoyl-phosphonsäureester der Formel IV

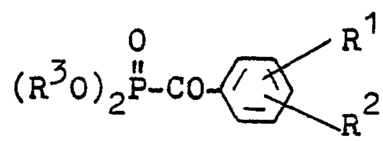

(IV)

in welcher

$R^1$, $R^2$ und $R^3$ die oben angegebene Bedeutung haben,

mit Alkalicyaniden in wässriger Essigsäure bei Temperaturen zwischen -2o und 1oo°C umsetzt.

Es ist als ausgesprochen überraschend zu bezeichnen, daß man nach dem neuen Verfahren (1) durch Umsetzung von Carbonsäuresalzen (III) mit Phosphorsäure-α-cyano-benzylestern (II) die bekannten Carbonsäure-α-cyano-benzylester (I) auf relativ einfache Weise in guten Ausbeuten erhält, da Carbonsäuresalze erfahrungsgemäß als relativ inerte Verbindungen einzustufen sind und Phosphorsäure-α-cyano-benzylester nicht als besonders reaktionsfähige Benzylierungsmittel bekannt sind.

Ein besonderer Vorteil des neuen Verfahrens (1) besteht darin, daß die aufwendige Herstellung von α-Cyanobenzylalkoholen und/oder entsprechenden Aldehyden als Zwischenprodukte für Carbonsäure-α-cyano-benzylester vermieden wird.

Verwendet man als Ausgangsstoffe bei Verfahren (1) beispielsweise das Lithiumsalz von 3-(2,2-Dichlorvinyl)-2,2-dimethyl-cyclopropan-1-carbonsäure und 2-Oxo-2-(4-fluor-3-phenoxy-α-cyano-benzyloxy)-5,5-dimethyl-1,3,2-dioxa-phosphorinan, so kann der Reaktionsablauf durch folgendes Formelschema skizziert werden:

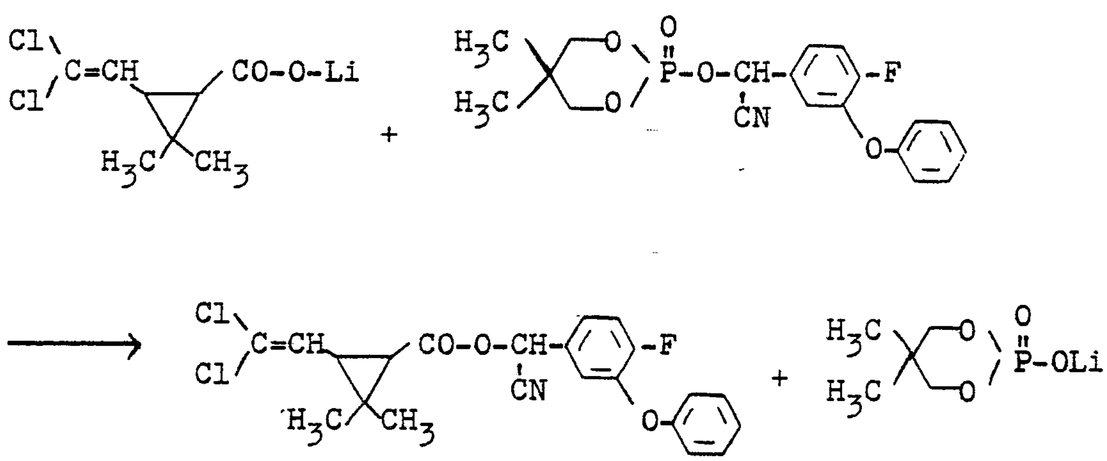

Die als Ausgangsstoffe zu verwendenden neuen Phosphorsäure-α-cyano-benzylester sind durch Formel (II) definiert. Vorzugsweise stehen darin

$R^1$ für Wasserstoff oder gegebenenfalls durch Fluor, Chlor oder Brom substituiertes Phenoxy,

$R^2$ für Wasserstoff, Fluor, Chlor oder Brom und

$R^3$ für 2,2-Dimethyl-propan-1,3-diyl.

Als Beispiele für die Verbindungen der Formel (II) seien genannt:
2-Oxo-2-(α-cyano-benzyloxy)-5,5-dimethyl-1,3,2-dioxa-phosphorinan,
2-Oxo-2-(3-phenoxy-α-cyano-benzyloxy)-5,5-dimethyl-1,3,2-dioxa-phosphorinan,
2-Oxo-2-(3-(4-fluor-phenoxy)-α-cyano-benzyloxy)-5,5-dimethyl-1,3,2-dioxa-phosphorinan und 2-Oxo-2-(4-fluor-3-phenoxy-α-cyano-benzyloxy)-5,5-dimethyl-1,3,2-dioxa-phosphorinan.

Die neuen Phosphorsäure-α-cyano-benzylester erhält man nach dem unter (3) angegebenen Verfahren, indem man Benzoyl-phosphonsäureester der Formel IV (oben) mit Alkalicyaniden, vorzugsweise mit Natriumcyanid oder Kaliumcyanid, in wässriger Essigsäure bei Temperaturen zwischen -2o und 1oo°C, vorzugsweise zwischen 0 und 5o°C, umsetzt.

In einer bevorzugten Ausführungsform dieses Verfahrens wird der Benzoyl-phosphonsäureester in Essigsäure vorgelegt und dazu unter Kühlen mit Eis-Wasser eine wässrige Cyanidlösung tropfenweise gegeben. Nach längerem Rühren bei Raumtemperatur wird mit Wasser verdünnt. Das dabei kristallin anfallende Produkt kann durch Filtration isoliert werden.

In Formel (IV) haben $R^1$, $R^2$ und $R^3$ die gleichen bevorzugten Bedeutungen wie die entsprechenden Reste in Formel (II).

Als Beispiele seien genannt:
2-Oxo-2-benzoyl-5,5-dimethyl-1,3,2-dioxa-phosphorinan,
2-Oxo-2-(3-phenoxy-benzoyl)-5,5-dimethyl-1,3,2-dioxa-phosphorinan,
2-Oxo-2-(3-(4-fluor-phenoxy)-benzoyl)-5,5-dimethyl-1,3,2-dioxa-phosphorinan und
2-Oxo-2-(4-fluor-3-phenoxy-benzoyl)-5,5-dimethyl-1,3,2-dioxa-phosphorinan.

Benzoyl-phosphonsäureester der Formel (IV) sind bekannt (vergleiche Houben-Weyl, Methoden der organischen Chemie, 4. Auflage, Band 12/1, S. 453, Georg-Thieme-Verlag, Stuttgart 1963).

Man erhält Benzoyl-phosphonsäureester der Formel (IV) durch Umsetzung von Phosphorigsäureestern der Formel V

$$(R^3O)_2P\text{-}OR^4 \qquad (V)$$

in welcher

$R^3$ die oben angegebene Bedeutung hat und

$R^4$ für Methyl oder Äthyl steht,

mit Benzoylhalogeniden der Formel VI

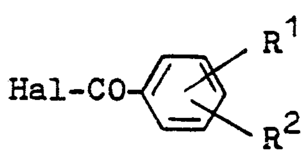

(VI)

in welcher

$R^1$ und $R^2$ die oben angegebenen Bedeutungen haben und

Hal für Fluor, Chlor oder Brom, vorzugsweise für Chlor, steht,

gegebenenfalls in Gegenwart eines Säurebindemittels und gegebenenfalls unter Verwendung eines Verdünnungsmittels bei Temperaturen zwischen 0 und 15o°C, vorzugsweise zwischen 2o und 1oo°C.

In den Formeln (V) und (VI) haben $R^1$, $R^2$ und $R^3$ die gleichen bevorzugten Bedeutungen wie in Formel (I).

Als Beispiel für die Phosphorigsäureester der Formel (V) sei 2-Äthoxy-5,5-dimethyl-1,3,2-dioxa-phosphorinan genannt. Diese Verbindung ist bereits bekannt (vergleiche Chem. Abstracts <u>85</u> (1976), 21 557g).

Als Beispiele für die Benzoylhalogenide der Formel (VI) seien genannt:
Benzoylchlorid, 3-Phenoxy-benzoylchlorid, 3-(4-Fluorphenoxy)-benzoylchlorid und 4-Fluor-3-phenoxy-benzoylchlorid.
Verbindungen der Formel (VI) sind bereits bekannt (vergleiche GB-PS 1 o52 39o).

Die weiter als Ausgangsstoffe zu verwendenden Carbonsäuresalze sind durch Formel (III) definiert. Vorzugsweise stehen darin

R für den Rest 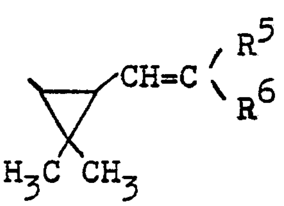

wobei $R^5$ für Wasserstoff, Methyl, Chlor oder Brom
und $R^6$ für Methyl, Chlor, Brom oder für gegebenenfalls halogensubstituiertes Phenyl steht,
oder

für den Rest $-\underset{R^8}{\underset{|}{CH}}-R^7$

wobei $R^7$ für gegebenenfalls durch Halogen, $C_1$-$C_4$-Alkyl, $C_1$-$C_4$-Alkoxy, $C_1$-$C_4$-Alkylthio, Halogenmethyl, $C_1$-$C_2$-Halogenalkoxy, $C_1$-$C_2$-Halogenalkylthio, $C_1$-$C_2$-Alkylendioxy oder $C_1$-$C_2$-Halogenalkylendioxy substituiertes Phenyl steht und

$R^8$ für Isopropyl oder Cyclopropyl steht, und

M für Lithium, Natrium oder Kalium.

Als Beispiele für die Verbindungen der Formel (III) seien genannt:
die Lithium-, Natrium- und Kalium-salze von
3-(2,2-Dichlor-vinyl)-2,2-dimethyl-cyclopropan-1-carbonsäure,
3-(2,2-Dibrom-vinyl)-2,2-dimethyl-cyclopropan-1-carbonsäure,
3-(2-Methyl-propen-1-yl)-2,2-dimethyl-cyclopropan-1-carbonsäure,
3-(2-Phenyl-vinyl)-2,2-dimethyl-cyclopropan-1-carbonsäure,
3-(2-(4-Chlor-phenyl)-vinyl)-2,2-dimethyl-cyclopropan-1-carbonsäure,
3-(2-Chlor-2-phenyl-vinyl)-2,2-dimethyl-cyclopropan-1-carbonsäure,
3-(2-Chlor-2-(4-chlor-phenyl)-vinyl)-2,2-dimethyl-cyclopropan-1-carbonsäure,
α-Isopropyl-phenylessigsäure, α-Isopropyl-4-chlor-phenyl-essigsäure, α-Isopropyl-4-methyl-phenyl-essigsäure,

α-Isopropyl-4-methoxy-phenyl-essigsäure, α-Isopropyl-4-trifluormethoxy-phenyl-essigsäure, α-Isopropyl-3,4-methylendioxy-phenyl-essigsäure, α-Cyclopropyl-phenyl-essigsäure und α-Cyclopropyl-4-chlor-phenyl-essigsäure.

Carbonsäuresalze der Formel (III) bzw. die entsprechenden freien Säuren oder Ester, aus welchen die Salze durch Umsetzung mit Alkalihydroxiden oder -alkoholaten hergestellt werden können, sind bekannt (vergleiche DE-OS' 1 926 433, 2 365 555, 2 544 15o und 2 73o 515).

Das erfindungsgemäße Verfahren (1) zur Herstellung von α-Cyano-benzylestern wird vorzugsweise unter Verwendung aprotisch-dipolarer Verdünnungsmittel durchgeführt. Als solche seien vor allem genannt:
Äther, wie z.B. Glykol-dimethyläther, Diglykol-dimethyläther, Tetrahydrofuran und Dioxan, Carbonsäureamide, wie z.B. Dimethylformamid, Dimethylacetamid und N-Methylpyrrolidon, Sulfoxide und Sulfone, wie z.B. Dimethylsulfoxid und Tetramethylensulfon, Phosphorsäureamide, wie z.B. Hexamethyl-phosphorsäuretriamid und Nitrile, wie z.B. Acetonitril und Propionitril.

Die Reaktionstemperatur liegt beim erfindungsgemäßen Verfahren (1) im allgemeinen zwischen 2o und 25o°C, vorzugsweise zwischen 1oo und 2oo°C. Die Umsetzung wird im allgemeinen bei Normaldruck oder einem dem Dampfdruck des Verdünnungsmittels bei der jeweiligen Reaktionstemperatur angepaßten Druck durchgeführt.

Zur Durchführung von Verfahren (1) setzt man auf 1 Mol Phosphorsäure-α-cyano-benzylester (II) zwischen o,8

und 1,5 Mol, vorzugsweise zwischen 1,o und 1,3 Mol Carbonsäuresalz (III) ein. Die Komponenten werden bei Raumtemperatur in einem der angegebenen Verdünnungsmittel vermischt; das Reaktionsgemisch wird dann auf die erforderliche Reaktionstemperatur aufgeheizt und mehrere Stunden bei dieser Temperatur gerührt.

Die Aufarbeitung erfolgt nach üblichen Methoden: Nach Abkühlen wird das Gemisch in Wasser gegossen und das Produkt mit einem mit Wasser nicht mischbaren Lösungsmittel(gemisch), wie z.B. Ligroin, extrahiert. Die Extraktionslösung wird mit Wasser gewaschen und getrocknet. Durch Destillation unter vermindertem Druck wird das Lösungsmittel entfernt und gegebenenfalls das zurückbleibende Rohprodukt durch Destillation gereinigt.

Die Produkte können zum Teil nicht unzersetzt destilliert werden; sie können jedoch durch sogenanntes "Andestillieren", d.h.durch längeres Erhitzen unter vermindertem Druck auf mäßig erhöhte Temperaturen von flüchtigen Anteilen befreit und auf diese Weise gereinigt werden. Zur Charakterisierung der Produkte dient der Brechungsindex.

Nach dem erfindungsgemäßen Verfahren herzustellende $\alpha$-Cyano-benzylester der Formel (I) sind bekannt. Sie werden als Insektizide und Akarizide verwendet (vergleiche DE-OS' 2 326 077 und 2 730 515).

Beispiel

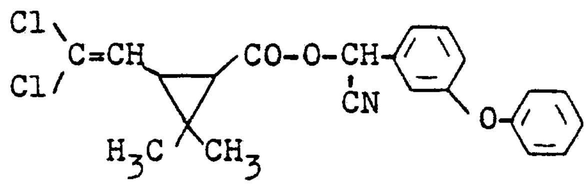

Eine Anschlämmung aus 38 g 2-Oxo-2-(3-phenoxy-α-cyano-benzyloxy)-5,5-dimethyl-1,3,2-dioxa-phosphorinan, 26 g 3-(2,2-Dichlor-vinyl)-2,2-dimethyl-cyclopropan-1-carbonsäure-Natriumsalz und 260 g Diglykol-dimethyläther wird unter Rühren 20 Stunden auf 150°C erhitzt. Nach Abkühlen wird das Gemisch in Wasser gegossen und das Produkt mit Ligroin extrahiert. Die Ligroinphase wird 3 mal mit Wasser gewaschen und über Natriumsulfat getrocknet. Nach Filtration wird das Ligroin im Vakuum abdestilliert und der Rückstand im Hochvakuum andestilliert. Man erhält als Rückstand 32 g (77% der Theorie) 3-(2,2-Dichlor-vinyl)-2,2-dimethyl-cyclopropan-1-carbonsäure-(3-phenoxy-α-cyano-benzyl)-ester.

Analog erhält man

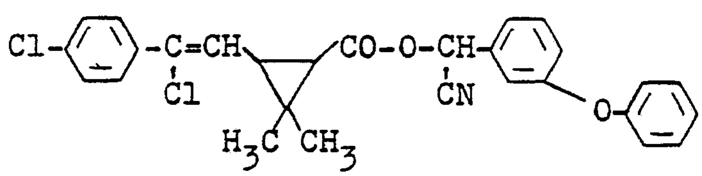

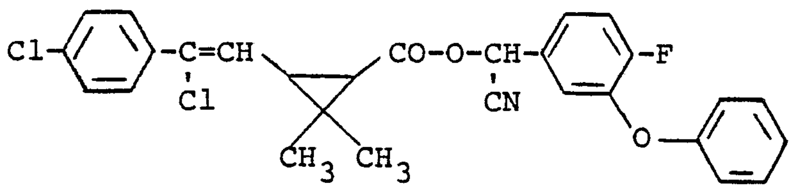

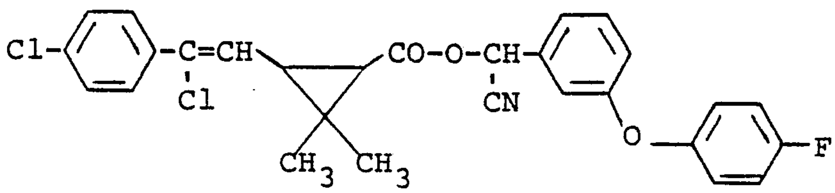

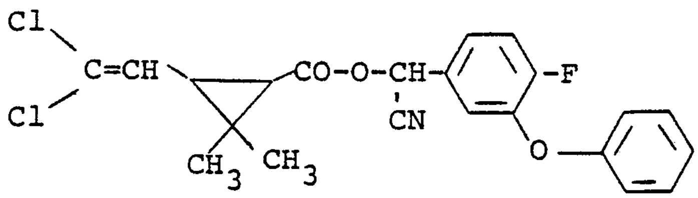

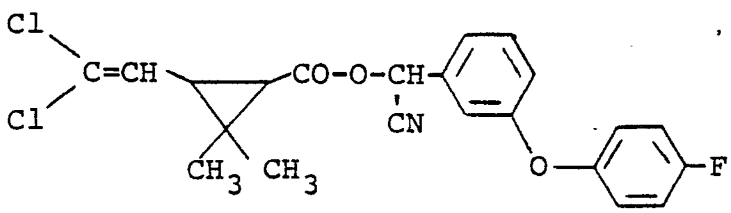

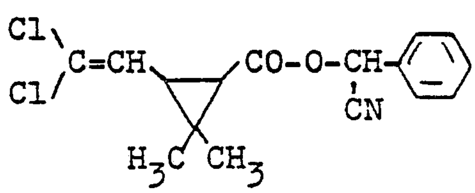

Herstellung der Ausgangsverbindungen

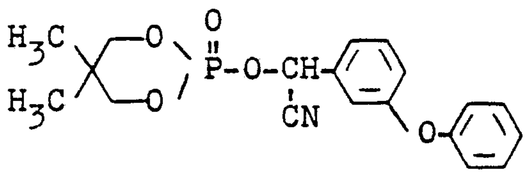

In eine Lösung von 7o g 2-Oxo-2-(3-phenoxy-benzoyl)-5,5-dimethyl-1,3,2-dioxa-phosphorinan in 18o ml Eisessig gibt man tropfenweise unter Kühlen mit Eis-Wasser bei ungefähr 2o°C innerhalb einer Stunde eine Lösung von 28 g Kaliumcyanid in 5o ml Wasser. Das Reaktionsgemisch wird ca. 2o Stunden bei 2o°C gerührt, unter intensivem Rühren mit 8oo ml Wasser versetzt, und drei Stunden gerührt.

Das in fester Form angefallene Produkt wird durch Absaugen isoliert und getrocknet. Zur Reinigung wird es in einem Gemisch aus 15o ml Methanol und 15o ml Wasser angeschlämmt, abgesaugt und auf Ton getrocknet. Man erhält 48 g (64% der Theorie) 2-Oxo-2-(3-phenoxy-α-cyano-benzyloxy)-5,5-dimethyl-1,3,2-dioxa-phosphorinan mit dem Schmelzpunkt 14o°C.

Analog erhält man

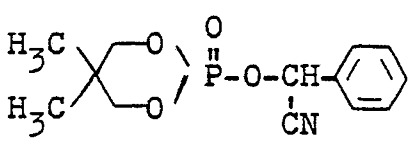

Schmelzpunkt: 125°C

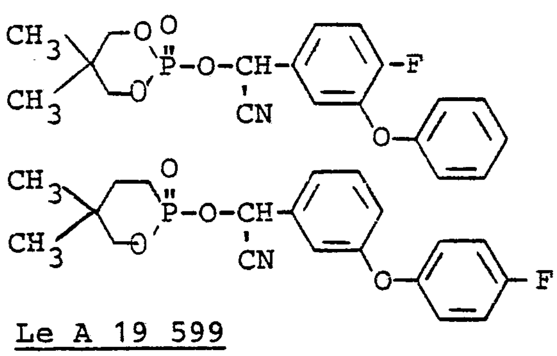

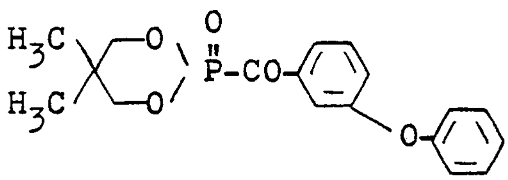

18 g 2-Äthoxy-5,5-dimethyl-1,3,2-dioxaphosphorinan werden unter Luftausschluß bei 6o-7o°C zu 23,5 g 3-Phenoxy-benzoylchlorid tropfenweise gegeben. Das Reaktionsgemisch wird eine Stunde bei 8o°C gerührt und dann im Hochvakuum das als Koppelprodukt entstandene Äthylchlorid abgezogen.
Man erhält 3o g (87% der Theorie) 2-Oxo-2-(3-phenoxy-benzoyl)-5,5-dimethyl-1,3,2-dioxa-phosphorinan.

Analog erhält man

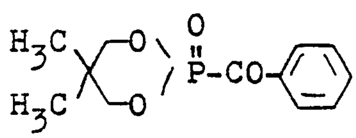

Schmelzpunkt: 95°C

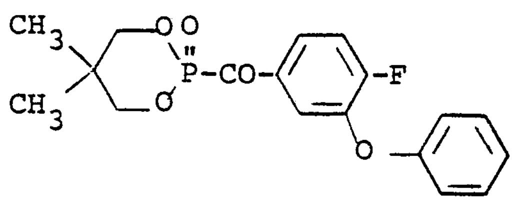

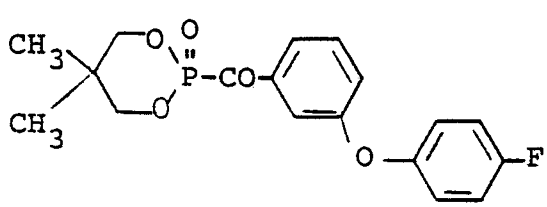

Patentansprüche

1. Verfahren zur Herstellung von α-Cyano-benzylestern der Formel I

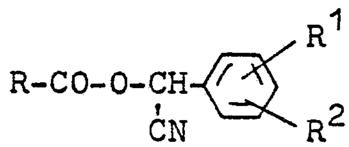

(I)

in welcher

R für einen offenkettigen oder cyclischen Alkylrest steht, der gegebenenfalls substituiert ist durch Halogen, Alkyl, Cycloalkyl, Alkenyl, welches gegebenenfalls durch Halogen substituiert ist, Styryl, welches gegebenenfalls durch Halogen substituiert ist, Phenyl, welches gegebenenfalls durch Halogen, Alkyl, Alkoxy, Alkylthio, Halogenalkyl, Halogenalkoxy, Halogenalkylthio oder gegebenenfalls halogensubstituiertes Alkylendioxy substituiert ist, spirocyclisch verknüpftes Cycloalk(en)yl, welches gegebenenfalls benzannelliert ist,

$R^1$ für Wasserstoff, Halogen, gegebenenfalls halogensubstituierte Reste Alkyl, Alkenyl, Alkinyl, Alkoxy, Alkenoxy, Alkinoxy, Aralkyl oder Aryloxy steht und

$R^2$ für Wasserstoff oder Halogen steht,

dadurch gekennzeichnet, daß man

Phosphorsäure-α-cyano-benzylester der Formel II

BAD ORIGINAL

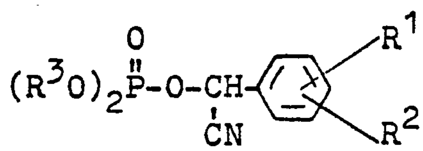 (II)

in welcher

$R^1$ und $R^2$ die oben angegebene Bedeutung haben und

$R^3$ für Alkyl, Phenyl oder Alkandiyl (Alkylen) steht,

mit Carbonsäuresalzen der Formel III

$$R\text{-}CO\text{-}O^{\ominus} \quad M^{\oplus} \qquad (III)$$

in welcher

R die oben angegebene Bedeutung hat und

M für ein Alkalimetall- oder Erdalkalimetall-äquivalent steht,

gegebenenfalls unter Verwendung eines Verdünnungsmittels bei Temperaturen zwischen 2o und 25o°C umsetzt.

2. Phosphorsäure-α-cyano-benzylester der Formel (II)

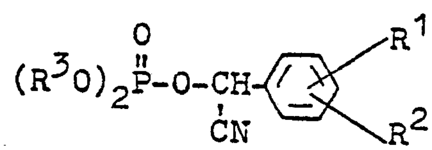 (II)

in welcher
$R^1$, $R^2$ und $R^3$ die oben angegebene Bedeutung haben;

3. Verfahren zur Herstellung von Phosphorsäure-α-cyano-benzylestern der Formel (II) in Anspruch 2, dadurch gekennzeichnet, daß man Benzoyl-phosphonsäureester der Formel IV

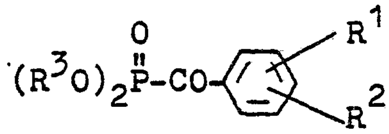 (IV)

in welcher

$R^1$, $R^2$ und $R^3$ die oben angegebene Bedeutung haben,

mit Alkalicyaniden in wässriger Essigsäure bei Temperaturen zwischen -2o und 1oo°C umsetzt.